(19) Europäisches Patentamt

European Patent Office

Office européen des brevets

(11) **EP 3 339 805 B1**

(12) **FASCICULE DE BREVET EUROPEEN**

(45) Date de publication et mention
de la délivrance du brevet:
**17.04.2019 Bulletin 2019/16**

(21) Numéro de dépôt: **17206281.2**

(22) Date de dépôt: **08.12.2017**

(51) Int Cl.:
*G01C 19/56* (2012.01)    *G01C 19/5776* (2012.01)
*G01C 19/60* (2006.01)    *G01C 21/16* (2006.01)
*G01P 15/08* (2006.01)    *G01C 25/00* (2006.01)

(54) **PROCEDE D'AIDE A LA NAVIGATION, PRODUIT PROGRAMME D'ORDINATEUR ET CENTRALE DE NAVIGATION INERTIELLE ASSOCIES**

NAVIGATIONSHILFEVERFAHREN, ENTSPRECHENDES COMPUTERPROGRAMMPRODUKT UND ENTSPRECHENDES TRÄGHEITSNAVIGATIONSSYSTEM

METHOD FOR ASSISTING NAVIGATION, ASSOCIATED COMPUTER PROGRAM PRODUCT AND INERTIAL NAVIGATION UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2016 FR 1662387**

(43) Date de publication de la demande:
**27.06.2018 Bulletin 2018/26**

(73) Titulaires:
- **Commissariat à l'énergie atomique et aux énergies alternatives
  75015 Paris (FR)**
- **Safran
  75015 Paris (FR)**

(72) Inventeurs:
- **MORALES, Sophie
  38760 VARCES (FR)**
- **PALACIOS LALOY, Augustin
  38000 GRENOBLE (FR)**
- **LEGER, Jean-Michel
  38190 VILLARD BONNOT (FR)**
- **REMILLIEUX, Georges
  92100 BOULOGNE-BILLANCOURT (FR)**
- **GRAMLICH, Marc
  92100 BOULOGNE-BILLANCOURT (FR)**
- **BRUNSTEIN, Etienne
  92100 BOULOGNE-BILLANCOURT (FR)**

(74) Mandataire: **Brevalex
95, rue d'Amsterdam
75378 Paris Cedex 8 (FR)**

(56) Documents cités:
**EP-A2- 2 685 212    WO-A1-2016/107806**

- **JIANCHENG FANG ET AL: "Advances in Atomic Gyroscopes: A View from Inertial Navigation Applications", SENSORS, vol. 12, no. 12, 11 décembre 2012 (2012-12-11), pages 6331-6346, XP055159658, ISSN: 1424-8220, DOI: 10.3390/s120506331**

**Description**

**DOMAINE TECHNIQUE**

La présente invention concerne un procédé d'aide à la navigation pour centrale inertielle de navigation fixe par rapport à un solide.

L'invention a également pour objet un produit programme d'ordinateur et une centrale inertielle de navigation.

L'invention s'applique au domaine de la navigation inertielle par gyroscopes atomiques à spin (ou ASG, de l'anglais « *atomic spin gyroscopes* »), tels que les gyroscopes à résonance magnétique nucléaire, encore appelés « gyroscopes RMN », et les co-magnétomètres.

**ÉTAT DE LA TECHNIQUE ANTÉRIEURE**

L'utilisation de gyroscopes ASG en tant que capteurs inertiels pour réaliser des mesures de rotation est connue. De tels gyroscopes ASG présentent généralement un faible bruit de dérive angulaire ARW (de l'anglais « *Angular Random Walk* ») et une faible dérive. En outre, de tels gyroscopes sont susceptibles d'être miniaturisés (volume de l'ordre de la dizaine de centimètres cubes) et sont susceptibles d'être produits à bas coût.

Les gyroscopes ASG représentent donc une alternative intéressante pour la conception de Centrales Inertielles de Navigation (CIN) qui soient fiables, de petite taille et peu coûteuses, notamment pour des applications de navigation autonome sans GPS (de l'anglais « *Global Positioning System* »).

Le document "Advances in Atomic Gyroscopes: A View from Inertial Navigation Applications" par J. Fanq et J. Qin dans SENSORS, vol. 12, no. 12, pages 6331-6346, du 11 décembre 2012, divulgue un procédé de navigation pour centrale inertielle comportant un gyroscope ASG.

Néanmoins, de tels gyroscopes ASG ne donnent pas entière satisfaction.

En effet, le temps de démarrage de tels gyroscopes ASG, c'est-à-dire la durée, à partir de leur mise sous tension, au terme de laquelle de tels gyroscopes sont dans une phase de fonctionnement opérationnel, est susceptible d'être trop long pour certaines applications de navigation autonome sans GPS.

Le temps de démarrage d'un gyroscope ASG présente deux principales limites :

- la première est une limite d'ordre technique liée au chauffage et à la stabilisation des asservissements au démarrage ;
- la seconde, d'ordre physique, dépend d'un couple gaz alcalin/gaz noble présent dans le gyroscope ASG, et correspond au temps minimal nécessaire pour polariser le gaz noble par échange de spin avec l'alcalin.

Ainsi, le temps de démarrage d'un gyroscope ASG est susceptible d'atteindre une ou plusieurs minutes.

Or, la mise en oeuvre d'une centrale inertielle de navigation nécessite de disposer de capteurs inertiels opérationnels et performants quelques secondes au maximum après la mise sous tension de la centrale inertielle de navigation, et ce de manière à limiter la durée de la phase d'initialisation de la centrale inertielle de navigation, encore appelée « phase d'alignement », avant le passage à un mode dit « de navigation » durant lequel la centrale inertielle est opérationnelle et délivre aux utilisateurs les informations de position, vitesse et attitude.

La phase d'alignement se décompose, par exemple, en les étapes suivantes :

- une mise en route de la centrale inertielle de navigation (quelques secondes à quelques dizaines de secondes) ;
- une initialisation de la position et de la vitesse (quelques dixièmes de seconde); et
- une orientation du repère de navigation (quelques minutes).

Les durées des différentes étapes sont données ci-dessus à titre indicatif dans le cas d'une phase d'alignement de type gyrocompas utilisée pour des applications de type transport aérien pour lesquelles la phase d'alignement présente donc une durée de quelques minutes.

On comprend que l'utilisation de gyroscopes de type ASG dans une centrale inertielle de navigation entraîne une augmentation de la durée de l'étape de mise en route, donc de la durée de la phase d'alignement de la centrale inertielle, du fait que le temps de démarrage des gyroscopes ASG est d'une ou plusieurs minutes.

Cette augmentation de la durée de la phase d'initialisation de la centrale inertielle de navigation n'est pas souhaitable. En effet, il est généralement souhaitable que cette durée d'initialisation soit la plus courte possible, notamment pour une application de navigation sans GPS.

Un but de l'invention est donc de proposer une centrale inertielle de navigation utilisant un gyroscope ASG qui soit fiable, de petite taille et peu coûteuse tout en permettant une mise en route rapide.

## EXPOSÉ DE L'INVENTION

A cet effet, l'invention a pour objet un procédé d'aide à la navigation du type précité, la centrale inertielle comportant au moins un capteur inertiel présentant un axe sensible, chaque capteur inertiel comprenant un gyroscope ASG et un gyroscope MEMS solidaires l'un de l'autre, le gyroscope ASG étant propre à délivrer un signal ASG représentatif d'une rotation autour de l'axe sensible correspondant, le gyroscope MEMS étant propre à délivrer un signal MEMS représentatif d'une rotation autour de l'axe sensible correspondant, le procédé comportant les étapes :

- calcul, entre une première date et une troisième date ultérieure, d'une trajectoire et, pour chaque capteur inertiel, d'une trajectoire biaisée correspondante, à partir des signaux MEMS, en supposant, pour la trajectoire biaisée, que le capteur inertiel présente un biais unitaire prédéterminé ;
- calcul, à partir de la troisième date, de la trajectoire et de chaque trajectoire biaisée à partir des signaux ASG, en supposant, pour la trajectoire biaisée, que le capteur inertiel présente un biais unitaire prédéterminé ;
- estimation d'un vecteur de biais introduit par les gyroscopes MEMS, à partir des signaux MEMS et des signaux ASG ;
- recalage, à une quatrième date ultérieure à la troisième date, de la trajectoire en fonction de chaque trajectoire biaisée, des biais unitaires et du vecteur de biais estimé, pour obtenir une trajectoire nominale qui n'est pas entachée par le biais des gyroscopes MEMS.

En effet, les gyroscopes MEMS présentent un temps de démarrage court, ce qui rend la centrale inertielle rapidement opérationnelle. La fusion entre les signaux collectés en provenance des gyroscopes MEMS et des gyroscopes ASG contribue à compenser les erreurs liées aux biais introduits par les gyroscopes MEMS.

La trajectoire nominale ainsi obtenue n'est plus entachée par le biais des gyroscopes MEMS.

En outre, contrairement à d'autres types d'instruments, les gyroscopes MEMS et ASG sont aptes à fournir une mesure en continu, ce qui rend possible leur utilisation dans une telle centrale inertielle.

Le procédé d'aide à la navigation objet de l'invention est donc fiable et autorise une mise en route rapide.

Suivant d'autres aspects avantageux de l'invention, la centrale inertielle de navigation comporte une ou plusieurs des caractéristiques suivantes, prise(s) isolément ou suivant toutes les combinaisons techniquement possibles :

- pour chaque gyromètre MEMS, la composante correspondante du vecteur de biais est égale à la moyenne, entre une deuxième date et la quatrième date, de la différence entre une vitesse angulaire issue du signal MEMS correspondant et une vitesse angulaire issue du signal ASG correspondant, la deuxième date étant comprise entre la première date et la troisième date ;
- la trajectoire nominale s'obtient en retranchant un décalage à la trajectoire, le décalage étant un terme de correction vectoriel calculé selon :

$$\delta \mathbf{Xn} = b_{0x}\frac{\partial \widehat{\mathbf{Xn}}}{\partial D0x} + b_{0y}\frac{\partial \widehat{\mathbf{Xn}}}{\partial D0y} + b_{0z}\frac{\partial \widehat{\mathbf{Xn}}}{\partial D0z}$$

où $\delta \mathbf{Xn}$ est le décalage ;
$b_{0i}$ est la i-ème composante du vecteur de biais ; et

la grandeur $\dfrac{\partial \widehat{Xn}}{\partial D0i}$ est calculée selon :

$$\frac{\partial \widehat{\mathbf{Xn}}}{\partial D0i} = \frac{\mathbf{XnDi}(t_{rec}) - \mathbf{Xn}(t_{rec})}{D0i}$$

où $\mathbf{XnDi}(t_{rec})$ est la i-ème trajectoire biaisée prise à la quatrième date ; et
D0i est le biais unitaire prédéterminé associé à la composante i ;

- le procédé comprend une étape de recouvrement, l'étape de recouvrement comportant :

  - entre une deuxième date et la troisième date, la deuxième date étant comprise entre la première date et la troisième date, une première phase pour calculer la trajectoire et chaque trajectoire biaisée à partir du signal MEMS ;

- à la troisième date, une commutation pour calculer la trajectoire et chaque trajectoire biaisée à partir d'un incrément d'angle correspondant, l'incrément d'angle étant obtenu, pour chaque axe sensible, par la relation :

$$d\theta_{com} = \theta_{ASG}(t_{com}) - \theta_{MEMS}(t_{com}-T_e) - \Delta\theta$$

où $d\theta_{com}$ est l'incrément d'angle ;
$\theta_{ASG}(t_{com})$ est une grandeur égale au cumul d'incréments d'angle de rotation autour de l'axe sensible entre la deuxième date et la troisième date, calculés à partir du signal ASG à la commutation ;
$\theta_{MEMS}(t_{com}-T_e)$ est une grandeur égale au cumul d'incréments d'angle de rotation autour de l'axe sensible entre la deuxième date et une durée $T_e$ avant la troisième date, calculés à partir du signal MEMS;

chaque incrément étant égal à l'intégrale, entre deux instants successifs, de la vitesse angulaire de rotation autour d'un axe sensible issue du signal MEMS ou ASG correspondant,

$\Delta\theta$ est un terme de correction angulaire prédéterminé ; et
$T_e$ est une durée prédéterminé ;

- entre la troisième date et la quatrième date, une deuxième phase pour calculer la trajectoire et chaque trajectoire biaisée à partir du signal ASG ;

- la correction angulaire est égale à la moyenne, entre la deuxième date et la troisième date, des valeurs prises au cours du temps par la quantité ($\theta_{ASG} - \theta_{MEMS}$), où $\theta_{ASG}$ est une grandeur égale, à un instant donné, au cumul depuis la deuxième date jusqu'audit instant donné, des incréments d'angle de rotation autour de l'axe sensible obtenus à partir du signal ASG, pour le capteur inertiel 4 considéré, et $\theta_{MEMS}$ est une grandeur égale, à un instant donné, au cumul, depuis la deuxième date jusqu'audit instant donné, des incréments d'angle de rotation autour de l'axe sensible, obtenus à partir du signal MEMS ;
- le procédé comporte, à partir de la quatrième date, le calcul de la trajectoire nominale uniquement à partir des signaux ASG.

En outre, l'invention a pour objet un produit programme d'ordinateur comprenant des instructions de code de programme qui, lorsqu'elles sont exécutées par un ordinateur, mettent en oeuvre le procédé tel que défini ci-dessus.
En outre, l'invention a pour objet une centrale inertielle de navigation, fixe par rapport à un solide, la centrale inertielle comportant au moins un capteur inertiel présentant un axe sensible, chaque capteur inertiel comprenant un gyroscope ASG et un gyroscope MEMS solidaires l'un de l'autre, le gyroscope ASG étant propre à délivrer un signal ASG représentatif d'une rotation autour de l'axe sensible correspondant, le gyroscope MEMS étant propre à délivrer un signal MEMS représentatif d'une rotation autour de l'axe sensible correspondant, la centrale inertielle comprenant, en outre, un calculateur configuré pour mettre en oeuvre le procédé d'aide à la navigation tel que défini ci-dessus.

**BRÈVE DESCRIPTION DES DESSINS**

L'invention sera mieux comprise à l'aide de la description qui va suivre, donnée uniquement à titre d'exemple non limitatif et faite en se référant aux dessins annexés sur lesquels :

- la figure 1 est une représentation schématique d'une centrale inertielle selon l'invention ;
- la figure 2 est une représentation schématique d'un capteur inertiel de la centrale inertielle de la figure 1 ; et
- la figure 3 est un graphe représentant l'évolution au cours du temps d'une vitesse angulaire mesurée par la centrale inertielle de la figure 1.

**EXPOSÉ DÉTAILLÉ DE MODES DE RÉALISATION PARTICULIERS**

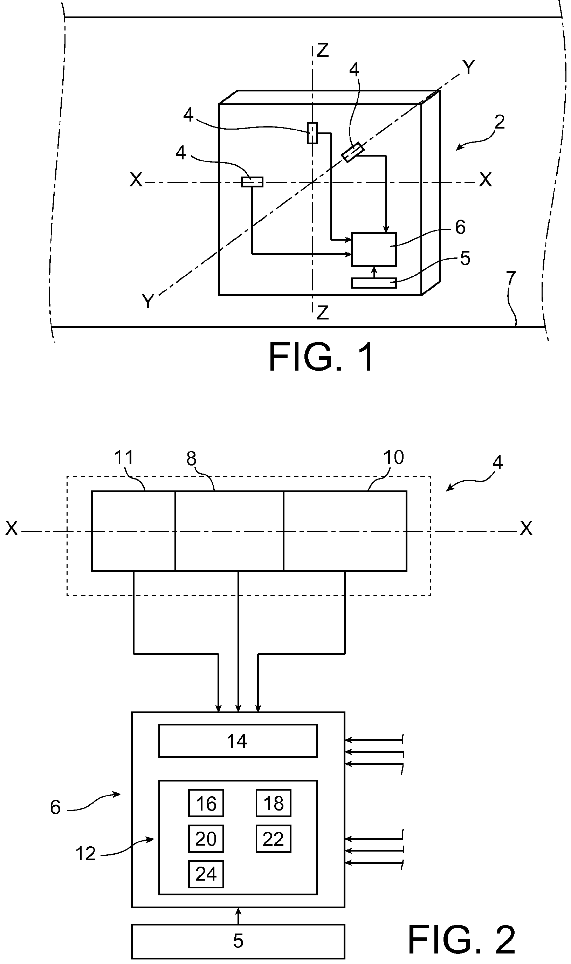

Dans ce qui suit, les grandeurs vectorielles seront notées en gras.
Une centrale inertielle 2 de navigation selon l'invention est représentée sur la figure 1.
La centrale inertielle 2 comporte au moins un capteur inertiel 4, une horloge 5 et un calculateur 6.
Chaque capteur inertiel 4 est propre à détecter un déplacement, telle qu'une rotation autour d'un axe prédéterminé correspondant, encore appelé « axe sensible », ou encore une translation, ou toute combinaison de rotations et de translations.

Par exemple, comme illustré par la figure 1, la centrale inertielle 2 comporte trois capteurs inertiels 4 présentant respectivement un axe sensible X-X, Y-Y et Z-Z. Les capteurs inertiels 4 sont fixes les uns par rapport aux autres.

Avantageusement, les axes sensibles X-X, Y-Y et Z-Z de chacun des capteurs inertiels 4 sont deux à deux non parallèles, par exemple orthogonaux.

L'horloge 5 est configurée pour délivrer un signal d'horloge représentatif de l'écoulement du temps.

Le calculateur 6 est configuré pour calculer la trajectoire au cours du temps **Xn**(t) d'un solide 7 fixe par rapport à la centrale inertielle 2. Un tel solide 7 est, par exemple, un aéronef embarquant la centrale inertielle 2.

En particulier, le calculateur 6 est configuré pour calculer la trajectoire **Xn**(t) du solide 7 en fonction du signal d'horloge et de signaux provenant des capteurs inertiels 4 et décrits ultérieurement.

Par « trajectoire », il est entendu, au sens de la présente invention, la donnée de la position, de la vitesse et de l'attitude du solide 7 dans un trièdre de référence prédéterminé lié à la Terre.

Par « attitude », il est entendu, au sens de la présente invention, la donnée des angles de roulis, de tangage et de cap formés par des axes prédéterminés du solide 7 et les axes du trièdre de référence prédéterminé. Dans ce cas, la trajectoire **Xn**(t) du solide 7 est un vecteur à neuf composantes, c'est-à-dire trois composantes de position, trois composantes de vitesse et trois angles d'attitude.

Chaque point de la trajectoire **Xn**(t) est associé à une date, encore appelée « instant », donnée par le signal d'horloge issu de l'horloge 5.

Chaque capteur inertiel 4 comporte un gyroscope ASG 8, un gyroscope MEMS 10 et un accéléromètre 11.

Le gyroscope ASG 8 présente un axe sensible définissant l'axe sensible du capteur inertiel 4.

Le gyroscope ASG 8 est propre à délivrer un signal ASG représentatif d'une rotation du capteur inertiel 4 autour de l'axe sensible correspondant.

Le gyroscope ASG 8 est, par exemple, un gyroscope RMN ou un co-magnétomètre, classiquement connus.

Le gyroscope ASG 8 est associé à un temps de démarrage $T_d$, encore appelé « durée de démarrage ». À compter de la mise sous tension, encore appelée « mise en route », du gyroscope ASG 8, le gyroscope ASG 8 n'est opérationnel qu'à l'issue d'une durée égale à la durée de démarrage $T_d$.

Par exemple, la durée de démarrage $T_d$ est typiquement de l'ordre de la minute.

Un gyroscope est dit « opérationnel », au sens de la présente invention, lorsqu'il se trouve dans un mode de fonctionnement nominal.

Le gyroscope MEMS 10 (acronyme de « *microelectromechanical systems* ») est un gyroscope à microsystème électromécanique classiquement connu.

Le gyroscope MEMS 10 est solidaire du gyroscope ASG 8.

Le gyroscope MEMS 10 présente un axe sensible confondu avec l'axe sensible du gyroscope ASG 8.

Le gyroscope MEMS 10 est propre à délivrer un signal MEMS représentatif d'une rotation du capteur inertiel 4 autour de l'axe sensible correspondant.

Le gyroscope MEMS 10 est opérationnel au plus quelques secondes après sa mise en route.

Pour chaque capteur inertiel 4, le gyroscope MEMS 10 correspondant est supposé présenter un biais bo moyen sur la durée de démarrage $T_d$. Un tel biais est homogène à une vitesse angulaire. La dérive de la valeur du biais $b_0$ sur la durée de démarrage $T_d$ est supposée négligeable devant la valeur du biais $b_0$ et compatible avec les besoins de la centrale inertielle de navigation 2.

Les valeurs des biais pour l'ensemble des trois axes sensibles X-X, Y-Y, Z-Z forment un vecteur de biais **B₀** à trois composantes. Les trois composantes du vecteur de biais **B₀**, notées $b_{0x}$, $b_{0y}$, $b_{0z}$, sont associées respectivement aux axes sensibles X-X, Y-Y et Z-Z.

En outre, pour chaque capteur inertiel 4, le gyroscope ASG 8 correspondant est supposé présenter, à l'issue de la durée de démarrage $T_d$, un biais dont la valeur et la dérive sont négligeables devant la valeur du biais bo du gyroscope MEMS 10 associé.

L'accéléromètre 11 présente un axe sensible, de préférence confondu avec l'axe sensible du capteur inertiel 4 correspondant.

L'accéléromètre 11 est propre à délivrer un signal d'accélération représentatif de l'accélération non gravitationnelle, encore appelée « force spécifique », du capteur inertiel 4 le long de l'axe sensible correspondant.

De préférence, l'accéléromètre 11 est solidaire du gyroscope ASG 8 et du gyroscope MEMS 10.

L'accéléromètre 11 est opérationnel au plus quelques secondes après sa mise en route.

Le calculateur 6 est relié au gyroscope ASG 8 pour recevoir le signal ASG. Le calculateur 6 est également relié au gyroscope MEMS 10 pour recevoir le signal MEMS. Le calculateur 6 est, en outre, relié à l'accéléromètre 11 pour recevoir le signal d'accélération. Le calculateur 6 est également relié à l'horloge 5 pour recevoir le signal d'horloge.

Le calculateur 6 comporte une mémoire 12 et un processeur 14.

La mémoire 12 comporte un emplacement de configuration 16 et un emplacement d'enregistrement 18.

La mémoire 12 est, en outre, configurée pour stocker un logiciel de navigation 20, un logiciel de calcul 22 et un logiciel de correction 24.

L'emplacement de configuration 16 est configuré pour stocker la durée de démarrage $T_d$, une durée de recouvrement $T_{rec}$, et une durée de commutation $T_{com}$.

Par exemple, la durée de commutation $T_{com}$ est typiquement de l'ordre de quelques secondes. La durée de commutation $T_{com}$ est inférieure ou égale à la durée de recouvrement $T_{rec}$.

L'emplacement de configuration 16 est également configuré pour stocker, pour chaque gyroscope MEMS 10, un biais unitaire constant arbitraire prédéterminé. Pour chaque axe sensible X-X, Y-Y et Z-Z, les biais unitaires sont respectivement notés D0x, D0y et D0z. La valeur des biais unitaires D0x, D0y, D0z est, de préférence, inférieure à quelques dixièmes de degrés par heure (°/h), par exemple D0x = D0y = D0z = 0,01°/h. Une telle valeur minimise les erreurs de linéarisation, tel que cela sera décrit ultérieurement.

L'emplacement d'enregistrement 18 est configuré pour stocker le vecteur de biais $\mathbf{B_0}$.

L'emplacement d'enregistrement 18 est également configuré pour stocker la trajectoire $\mathbf{Xn}(t)$ du solide 7.

L'emplacement d'enregistrement 18 est, en outre, configuré pour stocker trois trajectoires biaisées $\mathbf{XnDi}(t)$ (i valant x, y ou z) du solide 7 et un décalage $\delta\mathbf{Xn}$, définis ultérieurement.

Chaque trajectoire biaisée $\mathbf{XnDi}(t)$ est une trajectoire calculée en supposant que la centrale inertielle 2 est, pour l'axe i (i valant x, y ou z), entachée du biais unitaire correspondant D0i.

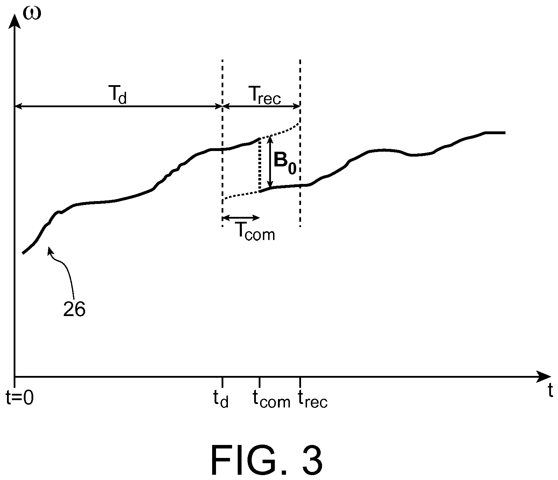

Le logiciel de navigation 20 est configuré pour calculer, pour chaque axe sensible X-X, Y-Y, Z-Z, l'évolution au cours du temps de la vitesse angulaire $\omega$ autour de l'axe sensible, illustré par la courbe 26 de la figure 3.

Le logiciel de navigation 20 est également configuré pour calculer au cours du temps, et pour chaque axe sensible X-X, Y-Y, Z-Z, la valeur d'un incrément d'angle $d\theta$ correspondant. Pour chacun des axes sensibles X-X, Y-Y, Z-Z, dans le cas d'une discrétisation des calculs numériques permettant le calcul de Xn(t), l'incrément $d\theta$ est égal à l'intégrale, entre deux instants successifs, de la vitesse angulaire $\omega$ issue du signal MEMS ou ASG correspondant. L'incrément est noté $d\theta_{MEMS}$, respectivement $d\theta_{ASG}$, s'il est obtenu à partir du signal MEMS, respectivement à partir du signal ASG.

Le logiciel de navigation 20 est également configuré pour calculer la trajectoire au cours du temps $\mathbf{Xn}(t)$ du solide 7, à partir du signal MEMS et/ou du signal ASG et du signal d'accélération fournis par chaque capteur inertiel 4. En particulier, le logiciel de navigation 20 est configuré pour calculer la trajectoire $\mathbf{Xn}(t)$ à partir des incréments $d\theta_{MEMS}$ et/ou $d\theta_{ASG}$, et de chaque signal d'accélération.

En outre, le logiciel de navigation 20 est configuré pour calculer les trois trajectoires biaisées $\mathbf{XnDi}(t)$ au cours du temps du solide 7 à partir des biais unitaires D0x, D0y, D0z stockés dans l'emplacement de configuration 16, et du signal MEMS et/ou du signal ASG, et du signal d'accélération fournis par chaque capteur inertiel 4. En particulier, le logiciel de navigation 20 est configuré pour calculer les trajectoires biaisées $\mathbf{XnDi}(t)$ à partir des biais unitaires D0x, D0y, D0z, des incréments $d\theta_{MEMS}$, $d\theta_{ASG}$, et de chaque signal d'accélération.

Le logiciel de calcul 22 est configuré pour calculer le vecteur de biais $\mathbf{B_0}$.

Le logiciel de calcul 22 est également configuré pour calculer une correction angulaire $\Delta\theta$ entre le signal MEMS et le signal ASG, définie ultérieurement.

Le logiciel de correction 24 est configuré pour calculer le décalage $\delta\mathbf{Xn}$.

Le processeur 14 est adapté pour exécuter chacun parmi le logiciel de navigation 20, le logiciel de calcul 22 et le logiciel de correction 24 stockés dans la mémoire 12 du calculateur 6.

Le fonctionnement de la centrale de navigation inertielle 2 va maintenant être décrit, en référence à la figure 3.

Au cours d'une étape de démarrage, le gyroscope ASG 8, le gyroscope MEMS 10 et l'accéléromètre 11 de chaque capteur inertiel 4 de la centrale inertielle 2 sont mis en route, c'est-à-dire mis sous tension, à un instant t=0 correspondant au début de l'étape de démarrage.

L'étape de démarrage présente une durée égale à la durée de démarrage $T_d$ stockée dans l'emplacement de configuration 16. Durant l'étape de démarrage, le gyroscope ASG 8 n'est pas opérationnel.

Au cours de l'étape de démarrage, le logiciel de navigation 20 calcule la trajectoire au cours du temps $\mathbf{Xn}(t)$ du solide 7 à partir du signal MEMS et du signal d'accélération en provenance de chaque capteur inertiel 4, c'est-à-dire que le logiciel de navigation 20 calcule la trajectoire $\mathbf{Xn}(t)$ en fonction partir des incréments $d\theta_{MEMS}$ et de chaque signal d'accélération. Un tel calcul est classiquement connu.

En outre, le logiciel de navigation 20 calcule les trajectoires biaisées au cours du temps $\mathbf{XnDi}(t)$ du solide 7.

Le calcul des trajectoires biaisées $\mathbf{XnDi}(t)$ diffère du calcul de la trajectoire $\mathbf{Xn}(t)$ uniquement en ce que les incréments $d\theta_{MEMS}$ obtenus à partir du signal MEMS sont augmentés d'un incrément d'angle $\delta\theta$.

Par exemple, dans le cas où le signal MEMS et le signal ASG sont chacun des signaux discrets obtenus par échantillonnage, à une fréquence d'échantillonnage $f_e$, d'un signal continu correspondant, l'incrément d'angle $\delta\theta$ est égal, pour chaque axe sensible X-X, Y-Y, Z-Z, au résultat de la division du biais unitaire D0x, D0y, D0z correspondant par la fréquence d'échantillonnage $f_e$, exprimée dans l'unité adéquate.

Durant l'étape de démarrage, le logiciel de navigation 20 écrit, dans l'emplacement d'enregistrement 18, la trajectoire $\mathbf{Xn}(t)$ et les trajectoires biaisées $\mathbf{XnDi}(t)$ calculées.

L'étape consécutive à l'étape de démarrage est une étape de recouvrement.

Durant l'étape de recouvrement, pour chaque capteur inertiel 4, chacun des deux gyroscopes ASG 8 et MEMS 10 est dans une phase de fonctionnement opérationnel, les deux gyroscopes ASG 8 et MEMS 10 étant utilisés conjointement.

Durant l'étape de recouvrement, les signaux ASG et MEMS sont comparées entre eux afin de commuter du gyroscope MEMS 10 vers le gyroscope ASG 8.

Par « commutation », il est entendu, au sens de la présente invention, le passage d'un calcul de la trajectoire **Xn**(t) à partir du signal MEMS à un calcul de la trajectoire **Xn**(t) à partir du signal ASG.

En outre, durant l'étape de recouvrement, les deux signaux ASG et MEMS sont également utilisés pour estimer le vecteur de biais **B₀** associé à chaque gyroscope MEMS 10. Le début de l'étape de recouvrement correspond un instant $t=T_d$, encore noté $t_d$.

L'étape de recouvrement présente une durée égale à la durée de recouvrement $T_{rec}$ stockée dans l'emplacement de configuration 16, de sorte que l'étape de recouvrement s'achève à l'instant $t=T_d+T_{rec}$, encore noté $t_{rec}$.

L'étape de recouvrement se décompose en une première phase, dite de commutation, et une deuxième phase.

La première phase présente une durée égale à la durée de commutation $T_{com}$ stockée dans l'emplacement de configuration 16. La première phase commence dès le début de l'étape de recouvrement, à l'instant $t_d$, et s'achève à l'instant $t=T_d+T_{com}$, encore noté $t_{com}$.

La commutation a lieu à l'instant $t_{com}$.

La deuxième phase commence à l'instant $t_{com}$, et s'achève à la fin de l'étape de recouvrement, c'est-à-dire à l'instant $t_{rec}$.

Durant l'étape de recouvrement, le logiciel de calcul 22 calcule, pour l'axe sensible i de chaque capteur inertiel 4, un biais $b_{0i}$ correspondant, égal à la moyenne, de préférence sur l'ensemble de l'étape de recouvrement, de la différence entre la vitesse angulaire issue du signal MEMS et la vitesse angulaire issue du gyroscope ASG 8 correspondant. Comme le biais du gyroscope ASG 8 est réputé faible par rapport au biais du gyroscope MEMS, l'écart de biais entre les deux gyroscopes MEMS 10 et ASG 8 est attribué au gyroscope MEMS 10.

Puis, pour chaque composante du vecteur de biais **B₀** associée à un axe sensible X-X, Y-Y, Z-Z, le logiciel de calcul 22 écrit, dans l'emplacement d'enregistrement 18, le biais $b_{0i}$ (i valant x, y ou z), calculé pour le gyroscope MEMS 10 du capteur inertiel 4 correspondant. La durée $T_{rec}$ est choisie pour permettre un filtrage des bruits blancs ARW des deux gyroscopes MEMS 10 et ASG 8 afin d'estimer au mieux le vecteur de biais **B₀.**

La précision d'estimation de chaque composante du vecteur de biais **B₀** est donnée par la formule (1) :

$$\sigma(\widehat{\delta b_0}) = \sqrt{\frac{qARWm^2+qARWr^2}{T_{rec}}}\,(1)$$

où $\sigma\left(\widehat{\delta b_0}\right)$ est l'écart type de l'erreur d'estimation du biais du gyroscope MEMS 10 (en °/h) ;

qARWm est la densité spectrale de puissance du bruit blanc de dérive du gyroscope MEMS 10 (en °/√h) ; et
qARWr est la densité spectrale de puissance du bruit blanc de dérive du gyroscope ASG 8 (en °/√h).

Par exemple, avec une densité spectrale de puissance qARWm du bruit blanc de dérive du gyroscope MEMS 10 valant $10^{-3}$°/√h, une densité spectrale de puissance qARWr du bruit blanc de dérive du gyroscope ASG 8 valant $10^{-3}$°/√h, une durée de recouvrement $T_{rec}$ valant 60 sec, l'écart type de l'erreur sur l'estimation $\sigma\left(\widehat{\delta b_0}\right)$ du biais du gyroscope MEMS 10 vaut 0,011°/h.

En outre, durant l'étape de recouvrement, le logiciel de navigation 20 calcule la trajectoire **Xn**(t) et les trajectoires biaisées **XnDi**(t) du solide 7.

Plus précisément, durant la première phase, le logiciel de navigation 20 calcule la trajectoire **Xn**(t) du solide 7 à partir du signal MEMS et du signal d'accélération en provenance de chaque capteur inertiel 4. En particulier, le logiciel de navigation 20 calcule la trajectoire **Xn**(t) à partir de l'incrément d'angle $d\theta_{MEMS}$ issu de chaque signal MEMS, et du signal d'accélération en provenance de chaque capteur inertiel 4.

En outre, durant la première phase, le logiciel de navigation 20 calcule les trajectoires biaisées **XnDi**(t) du solide 7 à partir du signal MEMS et du signal d'accélération en provenance de chaque capteur inertiel 4, et des biais unitaires. Plus précisément, le logiciel de navigation 20 calcule les trajectoires biaisées **XnDi**(t) à partir de l'incrément d'angle $d\theta_{MEMS}$ issu de chaque signal MEMS, de l'incrément d'angle $\delta\theta$ déterminé à partir des biais unitaires D0i et de chaque signal d'accélération.

En outre, durant la première phase, le logiciel de calcul 22 calcule, pour chaque capteur inertiel 4, une correction angulaire $\Delta\theta$ correspondante. La correction angulaire $\Delta\theta$ est égale à la moyenne, sur la durée de commutation $T_{com}$, des valeurs prises au cours du temps par la quantité ($\theta_{ASG}$ - $\theta_{MEMS}$), où $\theta_{MEMS}$ est une grandeur calculée à partir du signal MEMS et égale, à un instant donné, au cumul, depuis l'instant $t_d$ jusqu'audit instant donné, des incréments $d\theta_{MEMS}$, et où $\theta_{ASG}$ est une grandeur calculée à partir du signal ASG et égale, à un instant donné, au cumul, depuis l'instant $t_d$ jusqu'audit instant donné, des incréments $d\theta_{ASG}$, pour le capteur inertiel 4 considéré. La correction angulaire $\Delta\theta$ est destinée à corriger l'erreur induite, lors de la commutation, par le bruit blanc angulaire sur les mesures des gyroscopes ASG et MEMS.

Puis, lors de la commutation, le logiciel de calcul 22 transmet au logiciel de navigation 20 la correction angulaire $\Delta\theta$ obtenue à l'issue de la première phase, de façon à assurer la continuité entre les mesures fondées sur les gyroscopes MEMS 10 et les mesures fondées sur les gyroscopes ASG 8.

En outre, le logiciel de navigation 20 calcule le point de la trajectoire $\mathbf{Xn}(t_{com})$ du solide 7, à l'instant $t_{com}$, à partir d'un incrément d'angle $d\theta_{com}$, et de chaque signal d'accélération.

Pour un axe sensible donné, l'incrément d'angle $d\theta_{com}$ correspondant est obtenu par la relation (2) :

$$d\theta_{com} = \theta_{ASG}(t_{com}) - \theta_{MEMS}(t_{com}-T_e) - \Delta\theta \ (2)$$

où $\theta_{ASG}(t_{com})$ est la valeur prise par $\theta_{ASG}$ à l'instant $t_{com}$ ;
$\theta_{MEMS}(t_{com}-T_e)$ est la valeur prise par $\theta_{MEMS}$ une période d'échantillonnage avant l'instant $t_{com}$ ; et
$T_e$ est la période d'échantillonnage, égale à l'inverse de la fréquence d'échantillonnage.

En outre, durant la commutation, le logiciel de correction 24 réécrit, dans l'emplacement de configuration 16, la valeur de chaque dérive unitaire D0x, D0y, D0z pour lui attribuer une valeur nulle. Ceci est dû au fait que, à partir de la commutation, le calcul de la trajectoire $\mathbf{Xn}(t)$ et des trajectoires biaisées $\mathbf{XnDi}(t)$ est réalisé à partir des signaux ASG, la dérive des gyroscopes ASG 8 étant supposée négligeable devant la dérive des gyroscopes MEMS 10.

Pour chaque axe sensible, le logiciel de navigation 20 calcule le point de la trajectoire biaisée $\mathbf{XnD}(t_{com})$ du solide 7, à l'instant $t_{com}$, à partir de l'incrément d'angle $d\theta_{com}$ et de chaque signal d'accélération, la valeur de chaque dérive unitaire D0x, D0y, D0z ayant été fixée nulle lors de la commutation.

La commutation à un calcul de la trajectoire $\mathbf{Xn}(t)$ (et des trajectoires biaisées $\mathbf{XnDi}(t)$) à partir du signal ASG au lieu du signal MEMS est possible car l'erreur liée à la commutation dépend principalement du bruit blanc angulaire sur les mesures des gyroscopes ASG 8 et MEMS 10.

L'écart type de l'erreur angulaire commise liée à la commutation est donné par la relation (3) :

$$\sigma(\theta) = \sqrt{\frac{qBAm^2 + qBAr^2}{T_{com}}} \ (3)$$

où qBAm est la densité spectrale de puissance du bruit blanc angulaire du gyroscope MEMS 10 (en $\mu$rad/$\sqrt{Hz}$) ;
qBAr est la densité spectrale de puissance du bruit blanc angulaire du gyroscope ASG 8 (en $\mu$rad/$\sqrt{Hz}$) ;
$\sigma(\theta)$ est l'écart type de l'erreur angulaire due à la commutation.

Par exemple, pour une densité spectrale de puissance du bruit blanc angulaire valant 1 $\mu$rad/$\sqrt{Hz}$ pour chacun des deux gyroscopes ASG 8 et MEMS 10, et une durée de commutation $T_{com}$ égale à 5 s, l'écart type de l'erreur angulaire $\sigma(\theta)$ liée à la commutation vaut 0,63 $\mu$rad.

Puis, lors de la deuxième phase, le logiciel de navigation 20 calcule la trajectoire $\mathbf{Xn}(t)$ du solide 7 uniquement à partir du signal ASG et du signal d'accélération en provenance de chaque capteur inertiel 4.

Le logiciel de navigation 20 calcule également les trajectoires biaisées $\mathbf{XnDi}(t)$ du solide 7 uniquement à partir du signal ASG et du signal d'accélération en provenance de chaque capteur inertiel 4, la valeur de chaque dérive unitaire D0x, D0y, D0z ayant été fixée nulle lors de la commutation.

Durant l'étape de recouvrement, le logiciel de navigation 20 écrit, dans l'emplacement d'enregistrement 18, la trajectoire $\mathbf{Xn}(t)$ et les trajectoires biaisées $\mathbf{XnDi}(t)$ calculées.

En résumé, pendant la première phase, le logiciel de navigation 20 utilise les incréments d'angle $d\theta_{MEMS}$ issus du signal MEMS ; à l'instant de la commutation, le logiciel de navigation 20 utilise l'incrément $d\theta_{com}$ ; puis, lors de la deuxième phase, le logiciel de navigation 20 utilise les incréments $d\theta_{ASG}$ issus du signal ASG.

L'étape successive à l'étape de recouvrement est une étape de correction destinée à corriger les erreurs angulaires introduites par le biais des gyroscopes MEMS pendant l'utilisation des gyroscopes MEMS lors de l'étape de démarrage et de la première phase de l'étape de recouvrement.

L'étape de correction a lieu à la date $t_{rec}$.

Lors de l'étape de correction, le logiciel de navigation 20 calcule la trajectoire $\mathbf{Xn}(t)$ du solide 7 à partir du signal ASG et du signal d'accélération en provenance de chaque capteur inertiel 4.

En outre, au cours de l'étape de correction, le logiciel de correction 24 décale la trajectoire $\mathbf{Xn}(t)$ du solide 7 de la valeur $\delta\mathbf{Xn}$ à l'instant $t_{rec}$. La trajectoire ainsi décalée est la trajectoire qui aurait été calculée par le logiciel de navigation 20 si les gyroscopes ASG 8 avaient été opérationnels dès la mise en route de la centrale inertielle 2.

Comme décrit précédemment, le logiciel de correction 24 calcule, pendant l'étape de démarrage et l'étape de recouvrement, les trois trajectoires biaisées $\mathbf{XnDi}(t)$ (avec i prenant la valeur x, y ou z) correspondant aux données de sorties de l'algorithme de navigation lorsque les données du MEMS 10 sont biaisées par un biais unitaire constant $D0_i$ (avec i prenant la valeur x, y ou z). Par exemple, $\mathbf{XnDx}(t)$ est la trajectoire calculée par l'algorithme de navigation de la centrale inertielle de navigation lorsque les mesures nominales du capteur inertiel 4 d'axe sensible X-X sont décalées d'un biais unitaire supplémentaire $D0_x$. Ce biais $D0_i$ (stocké dans l'emplacement de configuration 16) prend deux valeurs selon l'instant considéré :

- de t=0 à $t_{com}$, la valeur de ce biais unitaire est fixée à une valeur qui doit être faible pour minimiser les erreurs de linéarisation. Typiquement $D0_x = D0_y = D0_z = 0,01°/h$ ;
- puis, de $t_{com}$ à $t_{rec}$, les biais sont fixés à 0 car la commutation conduit à la poursuite de la navigation en utilisant les données issues des gyroscopes ASG considérées sans biais.

Au début de l'étape de correction, le logiciel de correction 24 calcule des dérivées partielles $\frac{\partial \mathbf{Xn}}{\partial \mathrm{Di}}$ (avec i prenant la valeur x, y ou z). Chaque dérivée partielle $\frac{\partial \mathbf{Xn}}{\partial \mathrm{Di}}$ (avec i prenant la valeur x, y ou z) est la dérivée de la trajectoire $\mathbf{Xn}(t)$ par rapport à la dérive unitaire $D0_i$ du gyroscope MEMS 10 correspondante, calculée avec la relation suivante (4) :

$$\frac{\partial \widehat{\mathbf{Xn}}}{\partial \mathrm{Di}} = \frac{\mathbf{XnDi}(t_{rec}) \cdot \mathbf{Xn}(t_{rec})}{D0_i} \ (4)$$

où $D0_i$ est le biais unitaire associé à l'axe i.

Le logiciel de correction 24 calcule ensuite le décalage $\delta\mathbf{Xn}$ vectoriel à partir de l'estimée des dérivées partielles $\frac{\partial \widehat{\mathbf{Xn}}}{\partial \mathrm{Di}}$ et de l'estimée du vecteur de biais $\mathbf{B_0}$ du gyroscope MEMS 10 selon la formule (5) :

$$\delta\mathbf{Xn} = b_{0x}\frac{\partial \widehat{\mathbf{Xn}}}{\partial D0_x} + b_{0y}\frac{\partial \widehat{\mathbf{Xn}}}{\partial D0_y} + b_{0z}\frac{\partial \widehat{\mathbf{Xn}}}{\partial D0_z} \ (5)$$

$b_{0i}$ étant la composante i du vecteur de biais $\mathbf{B_0}$.
$\delta\mathbf{Xn}$ est donc un vecteur à neuf dimensions.

Puis le logiciel de correction 24 recale la trajectoire $\mathbf{Xn}(t)$ à l'instant $t_{rec}$ en soustrayant le terme de correction $\delta\mathbf{Xn}$ à la trajectoire $\mathbf{Xn}(t)$ selon la relation (6) :

$$\mathbf{Xn}(\text{après recalage}) = \mathbf{Xn}(\text{avant recalage}) - \mathbf{\delta Xn} \ (6)$$

De cette façon, l'erreur initiale due à l'utilisation des gyroscopes MEMS 10 est corrigée.

La trajectoire $\mathbf{Xn}(t)$ recalée est dite « trajectoire nominale ».

Une fois la trajectoire $\mathbf{Xn}(t)$ recalée, le calcul des trajectoires biaisées est interrompu, car inutile. Par la suite, le logiciel de navigation 20 poursuit le calcul de la trajectoire $\mathbf{Xn}(t)$ du solide 7 à partir de l'incrément d'angle issu uniquement du signal ASG et du signal d'accélération en provenance de chaque capteur inertiel 4.

La méthode de correction du biais du gyroscope MEMS 10 exposée ci-dessus conduit à linéariser $\mathbf{Xn}$ par rapport aux trois biais unitaires D0x, D0y et D0z. Ceci impose une valeur de biais $b_{0i}$ (avec i prenant la valeur x, y ou z) qui ne dépasse pas quelques dixièmes de degrés par heure, pour éviter une erreur de navigation trop élevée conduisant à des non-linéarités trop fortes rendant invalide la formule de correction 5 ci-dessus.

La trajectoire $\mathbf{Xn}(t)$ calculée par le logiciel de navigation 20 à l'issue de la commutation est entachée par le biais des gyroscopes MEMS 10, qui introduit des erreurs de navigation dans le calcul de la trajectoire pendant l'utilisation des gyroscopes MEMS 10 depuis la mise en route de la centrale inertielle (t=0) jusqu'à la fin de la première phase (t$_{com}$), ces erreurs se propageant jusqu'à la fin de la deuxième phase de l'étape de recouvrement (t$_{rec}$). Grâce à une telle centrale inertielle 2, de telles erreurs de navigation sont compensées et un démarrage rapide de la centrale inertielle est possible.

La méthode de correction des erreurs induites par le biais des gyroscopes MEMS 10 qui a été décrite ci-dessus présente l'avantage, contrairement à une méthode qui consisterait à recalculer l'ensemble de la trajectoire depuis le début avec des mesures des gyroscopes MEMS corrigées de **B$_0$,** d'être simple à mettre en oeuvre en temps réel, et de ne pas nécessiter le stockage d'un volume important de données en un temps très court.

Une telle méthode permet de corriger à l'instant t$_{rec}$ les erreurs induites durant la navigation de l'instant t=0 à l'instant t$_{com}$ par la dérive du gyroscope MEMS, et ce sans requérir le rejeu (c'est-à-dire le recalcul) de la navigation depuis le début avec des mesures de gyroscope corrigées de la valeur du biais.

Le recours à des gyroscopes MEMS et ASG autorise un fonctionnement continu au cours du temps, de tels gyroscopes étant aptes à fournir une mesure en continu au cours du temps. Cette propriété rend possible l'utilisation de tels gyroscopes dans une centrale inertielle. En effet, notamment pour des raisons de sécurité, une discontinuité au cours du temps dans les mesures d'angle de rotation ou de vitesse de rotation n'est pas tolérable. L'utilisation de tels gyroscopes est donc avantageuse par rapport à l'utilisation, par exemple, de gyroscopes à onde de matière, qui présentent l'inconvénient de posséder une bande passante faible et de fournir des mesures discontinues dans le temps.

En outre, les faibles dimensions et coûts de production des gyroscopes ASG et MEMS rendent la centrale inertielle 2 peu coûteuse.

## Revendications

1.  Procédé d'aide à la navigation pour centrale inertielle (2) de navigation fixe par rapport à un solide (7), la centrale inertielle (2) comportant au moins un capteur inertiel (4) présentant un axe sensible (X-X, Y-Y, Z-Z), chaque capteur inertiel (4) comprenant un gyroscope atomique à spin (ASG) (8) et un gyroscope à microsystème électromécanique (MEMS) (10) solidaires l'un de l'autre, le gyroscope ASG (8) étant propre à délivrer un signal ASG représentatif d'une rotation autour de l'axe sensible (X-X, Y-Y, Z-Z) correspondant, le gyroscope MEMS (10) étant propre à délivrer un signal MEMS représentatif d'une rotation autour de l'axe sensible (X-X, Y-Y, Z-Z) correspondant, le procédé comportant les étapes :

    - calcul, entre une première date (t=0) et une troisième date (t$_{com}$) ultérieure, d'une trajectoire (**Xn**(t)) et, pour chaque capteur inertiel (4), d'une trajectoire biaisée (**XnDi**(t)) correspondante, à partir des signaux MEMS, en supposant, pour la trajectoire biaisée (**XnDi**(t)), que le capteur inertiel (4) présente un biais unitaire (D0x, D0y, D0z) prédéterminé ;
    - calcul, à partir de la troisième date (t$_{com}$), de la trajectoire (**Xn**(t)) et de chaque trajectoire biaisée **(XnDi(t))** à partir des signaux ASG, en supposant, pour la trajectoire biaisée **(XnDi(t)),** que le capteur inertiel (4) présente un biais unitaire (D0x, D0y, D0z) prédéterminé ;
    - estimation d'un vecteur de biais (**B$_0$**) introduit par les gyroscopes MEMS (10), à partir des signaux MEMS et des signaux ASG ;
    - recalage, à une quatrième date (t$_{rec}$) ultérieure à la troisième date (t$_{com}$), de la trajectoire (**Xn**(t)) en fonction de chaque trajectoire biaisée **(XnDi(t)),** des biais unitaires (D0x, D0y, D0z) et du vecteur de biais (**B$_0$**) estimé, pour obtenir une trajectoire nominale (**Xn**(t)) qui n'est pas entachée par le biais des gyroscopes MEMS (10).

2.  Procédé selon la revendication 1, dans lequel, pour chaque gyromètre MEMS (10), la composante correspondante (b$_{0x}$, b$_{0y}$, b$_{0z}$) du vecteur de biais (**B$_0$**) est égale à la moyenne, entre une deuxième date (t$_d$) et la quatrième date (t$_{rec}$), de la différence entre une vitesse angulaire issue du signal MEMS correspondant et une vitesse angulaire issue du signal ASG correspondant, la deuxième date (t$_d$) étant comprise entre la première date (t=0) et la troisième date (t$_{com}$).

3.  Procédé selon la revendication 1 ou 2, dans lequel la trajectoire nominale (**Xn**(t)) s'obtient en retranchant un décalage (δ**Xn**) à la trajectoire (**Xn**(t)), le décalage étant un terme de correction vectoriel calculé selon :

$$\delta \mathbf{Xn} = b_{0x}\frac{\partial \widehat{\mathbf{Xn}}}{\partial \mathrm{D0x}} + b_{0y}\frac{\partial \widehat{\mathbf{Xn}}}{\partial \mathrm{D0y}} + b_{0z}\frac{\partial \widehat{\mathbf{Xn}}}{\partial \mathrm{D0z}}$$

où δ**Xn** est le décalage ;

$b_{0i}$ est la i-ème composante du vecteur de biais ($\mathbf{B_0}$) ; et

la grandeur $\dfrac{\partial \widehat{Xn}}{\partial D0i}$ est calculée selon :

$$\frac{\partial \widehat{\mathbf{Xn}}}{\partial D0i} = \frac{\mathbf{XnDi}(t_{rec})\text{-}\mathbf{Xn}(t_{rec})}{D0i}$$

où $\mathbf{XnDi}(t_{rec})$ est la i-ème trajectoire biaisée ($\mathbf{XnDi}(t)$) prise à la quatrième date ($t_{rec}$) ; et
D0i est le biais unitaire prédéterminé associé à la composante i.

4. Procédé selon la revendication 1 comprenant une deuxième date ($t_d$) comprise entre la première date (t=0) et la troisième date ($t_{com}$),
ou procédé selon la revendication 2,
ou procédé selon la revendication 3 dépendant de la revendication 1 et comprenant une deuxième date ($t_d$) comprise entre la première date (t=0) et la troisième date ($t_{com}$),
ou procédé selon la revendication 3 dépendant de la revendication 2, comprenant une étape de recouvrement, l'étape de recouvrement comportant :

- entre la deuxième date ($t_d$) et la troisième date ($t_{com}$), une première phase pour calculer la trajectoire ($\mathbf{Xn}(t)$) et chaque trajectoire biaisée ($\mathbf{XnDi}(t)$) à partir du signal MEMS ;
- à la troisième date ($t_{com}$), une commutation pour passer du calcul à partir du signal MEMS de la trajectoire ($\mathbf{Xn}(t)$) et de chaque trajectoire biaisée ($\mathbf{XnDi}(t)$) à un calcul à partir du signal ASG de la trajectoire ($\mathbf{Xn}(t)$) et de chaque trajectoire biaisée ($\mathbf{XnDi}(t)$), à partir d'un incrément d'angle ($d\theta_{com}$) correspondant, l'incrément d'angle ($d\theta_{com}$) étant obtenu, pour chaque axe sensible (X-X, Y-Y, Z-Z), par la relation :

$$d\theta_{com} = \theta_{ASG}(t_{com}) - \theta_{MEMS}(t_{com}\text{-}T_e) - \Delta\theta$$

où $d\theta_{com}$ est l'incrément d'angle ;
$\theta_{ASG}(t_{com})$ est une grandeur égale au cumul d'incréments ($d\theta_{ASG}$) d'angle de rotation autour de l'axe sensible (X-X, Y-Y, Z-Z) entre la deuxième date ($t_d$) et la troisième date ($t_{com}$), calculés à partir du signal ASG ;
$\theta_{MEMS}(t_{com}\text{-}T_e)$ est une grandeur égale au cumul d'incréments ($d\theta_{MEMS}$) d'angle de rotation autour de l'axe sensible (X-X, Y-Y, Z-Z) entre la deuxième date ($t_d$) et une durée $T_e$ avant la troisième date ($t_{com}$), calculés à partir du signal MEMS ;
chaque incrément ($d\theta_{MEMS}$, $d\theta_{ASG}$) étant égal à l'intégrale, entre deux instants successifs, de la vitesse angulaire ($\omega$) de rotation autour d'un axe sensible (X-X, Y-Y, Z-Z) issue du signal MEMS ou ASG correspondant,
$\Delta\theta$ est un terme de correction angulaire prédéterminé ; et
$T_e$ est une durée prédéterminé ;

- entre la troisième date ($t_{com}$) et la quatrième date ($t_{rec}$), une deuxième phase pour calculer la trajectoire ($\mathbf{Xn}(t)$) et chaque trajectoire biaisée ($\mathbf{XnDi}(t)$) à partir du signal ASG.

5. Procédé selon la revendication 4, dans lequel la correction angulaire ($\Delta\theta$) est égale à la moyenne, entre la deuxième date ($t_d$) et la troisième date ($t_{com}$), des valeurs prises au cours du temps par la quantité ($\theta_{ASG}$ - $\theta_{MEMS}$),
où $\theta_{ASG}$ est une grandeur égale, à un instant donné, au cumul depuis la deuxième date ($t_d$) jusqu'audit instant donné, des incréments ($d\theta_{ASG}$) d'angle de rotation autour de l'axe sensible (X-X, Y-Y, Z-Z) obtenus à partir du signal ASG, pour le capteur inertiel 4 considéré, et
$\theta_{MEMS}$ est une grandeur égale, à un instant donné, au cumul, depuis la deuxième date ($t_d$) jusqu'audit instant donné, des incréments ($d\theta_{MEMS}$) d'angle de rotation autour de l'axe sensible (X-X, Y-Y, Z-Z), obtenus à partir du signal MEMS.

6. Procédé selon l'une quelconque des revendications 1 à 5, comportant, à partir de la quatrième date ($t_{rec}$), le calcul de la trajectoire nominale ($\mathbf{Xn}(t)$) uniquement à partir des signaux ASG.

7. Produit programme d'ordinateur comprenant des instructions de code de programme qui, lorsqu'elles sont exécutées par un ordinateur, mettent en oeuvre le procédé d'aide à la navigation selon l'une quelconque des revendications 1 à 6.

8. Centrale inertielle (2) de navigation fixe par rapport à un solide (7), la centrale inertielle (2) comportant au moins un capteur inertiel (4) présentant un axe sensible (X-X, Y-Y, Z-Z), chaque capteur inertiel (4) comprenant un gyroscope atomique à spin (ASG) (8) et un gyroscope à microsystème électromécanique (MEMS) (10) solidaires l'un de l'autre, le gyroscope ASG (8) étant propre à délivrer un signal ASG représentatif d'une rotation autour de l'axe sensible (X-X, Y-Y, Z-Z) correspondant, le gyroscope MEMS (10) étant propre à délivrer un signal MEMS représentatif d'une rotation autour de l'axe sensible (X-X, Y-Y, Z-Z) correspondant, la centrale inertielle (2) comprenant, en outre, un calculateur (6) configuré pour mettre en oeuvre le procédé d'aide à la navigation selon l'une quelconque des revendications 1 à 6.

**Patentansprüche**

1. Navigationshilfsverfahren für ein Trägheitsnavigationssystem (2), das in Bezug auf einen Festkörper (7) fest ist, wobei das Trägheitssystem (2) zumindest einen Trägheitssensor (4) mit einer empfindlichen Achse (X-X, Y-Y, Z-Z) enthält, wobei jeder Trägheitssensor (4) ein Atomspin-Gyroskop (ASG) (8) und ein Gyroskop mit elektromagnetischem Mikrosystem (MEMS) (10) enthält, die miteinander verbunden sind, wobei das ASG-Gyroskop (8) dazu geeignet ist, ein ASG-Signal zu liefern, das repräsentativ ist für eine Drehung um die entsprechende empfindliche Achse (X-X, Y-Y, Z-Z), wobei das MEMS-Gyroskop (10) dazu geeignet ist, ein MEMS-Signal zu liefern, das repräsentativ ist für eine Drehung um die entsprechende empfindliche Achse (X-X, Y-Y, Z-Z), wobei das Verfahren die nachstehenden Schritte umfasst:

- Berechnen einer Trajektorie (**Xn**(t)) zwischen einem ersten Zeitpunkt (t=0) und einem späteren dritten Zeitpunkt ($t_{com}$), und für jeden Trägheitssensor (4) Berechnen einer entsprechenden verzerrten Trajektorie (**XnDi**(t)) ausgehend von den MEMS-Signalen unter der Annahme, dass bei der verzerrten Trajektorie (**XnDi**(t)) der Trägheitssensor (4) eine vorbestimmte einheitliche Verzerrung (D0x, D0y, D0z) aufweist;
- Berechnen der Trajektorie (**Xn**(t)) und jeder verzerrten Trajektorie (**XnDi**(t)) ab dem dritten Zeitpunkt ($t_{com}$) ausgehend von den ASG-Signalen unter der Annahme, dass bei der verzerrten Trajektorie (**XnDi**(t)) der Trägheitssensor (4) eine vorbestimmte einheitliche Verzerrung (D0x, D0y, D0z) aufweist;
- Abschätzen eines durch die MEMS-Gyroskope (10) eingeführten Verzerrungsvektors (**B$_0$**) ausgehend von den MEMS-Signalen und den ASG-Signalen;
- Korrektur der Trajektorie (Xn(t)) zu einem vierten Zeitpunkt ($t_{rec}$) nach dem dritten Zeitpunkt ($t_{com}$) in Abhängigkeit von jeder verzerrten Trajektorie (**XnDi**(t)), von den einheitlichen Verzerrungen (D0x, D0y, D0z) und des geschätzten Verzerrungsvektors (**B$_0$**), um eine nominale Trajektorie (**Xn**(t)) zu erhalten, die nicht mit der Verzerrung der MEMS-Gyroskope (10) behaftet ist.

2. Verfahren nach Anspruch 1, wobei für jedes MEMS-Gyroskop (10) die entsprechende Komponente ($b_{0x}$, $b_{0y}$, $b_{0z}$) des Verzerrungsvektors (**B$_0$**) gleich dem Mittelwert der Differenz zwischen einer aus dem entsprechenden MEMS-Signal ergehenden Winkelgeschwindigkeit und einer aus dem entsprechenden ASG-Signal ergehenden Winkelgeschwindigkeit zwischen einem zweiten Zeitpunkt ($t_d$) und dem vierten Zeitpunkt ($t_{rec}$) ist, wobei der zweite Zeitpunkt ($t_d$) zwischen dem ersten Zeitpunkt (t=0) und dem dritten Zeitpunkt ($t_{com}$) liegt.

3. Verfahren nach Anspruch 1 oder 2, wobei die nominale Trajektorie (**Xn**(t)) erhalten wird, indem ein Versatz ($\delta$**Xn**) von der Trajektorie (**Xn**(t)) subtrahiert wird, wobei der Versatz ein Vektorkorrekturterm ist, der berechnet wird nach

$$\delta\mathbf{Xn} = b_{0x}\frac{\partial\widehat{\mathbf{Xn}}}{\partial D0x} + b_{0y}\frac{\partial\widehat{\mathbf{Xn}}}{\partial D0y} + b_{0z}\frac{\partial\widehat{\mathbf{Xn}}}{\partial D0z}$$

worin $\delta$**Xn** der Versatz ist;
$b_{0i}$ die i-te Komponente des Verzerrungsvektors (**B$_0$**) ist; und

die Größe $\frac{\partial\widehat{\mathbf{Xn}}}{\partial D0i}$ berechnet wird nach

$$\frac{\partial \widehat{\mathbf{Xn}}}{\partial D0i} = \frac{\mathbf{XnDi}(t_{rec}) - \mathbf{Xn}(t_{rec})}{D0i}$$

worin $\mathbf{XnDi}(t_{rec})$ die i-te verzerrte Trajektorie ($\mathbf{XnDi}(t)$), aufgenommen zum vierten Zeitpunkt ($t_{rec}$), ist; und D0i die der Komponente i zugeordnete vorbestimmte, einheitliche Verzerrung ist.

4. Verfahren nach Anspruch 1, umfassend einen zweiten Zeitpunkt ($t_d$), der zwischen dem ersten Zeitpunkt (t=0) und dem dritten Zeitpunkt ($t_{com}$) liegt, oder Verfahren nach Anspruch 2, oder Verfahren nach Anspruch 3 in Abhängigkeit von Anspruch 1, umfassend einen zweiten Zeitpunkt ($t_d$), der zwischen dem ersten Zeitpunkt (t=0) und dem dritten Zeitpunkt ($t_{com}$) liegt, oder Verfahren nach Anspruch 3 in Abhängigkeit von Anspruch 2, umfassend einen Erfassungsschritt, wobei der Erfassungsschritt umfasst:

- eine erste Phase zwischen dem zweiten Zeitpunkt ($t_d$) und dem dritten Zeitpunkt ($t_{com}$), um die Trajektorie ($\mathbf{Xn}(t)$) und jede verzerrte Trajektorie ($\mathbf{XnDi}(t)$) ausgehend von dem MEMS-Signal zu berechnen;
- eine Umschaltung zum dritten Zeitpunkt ($t_{com}$), um von der Berechnung der Trajektorie ($\mathbf{Xn}(t)$) und von jeder verzerrten Trajektorie ($\mathbf{XnDi}(t)$) ausgehend von dem MEMS-Signal zu einer Berechnung der Trajektorie ($\mathbf{Xn}(t)$) und jeder verzerrten Trajektorie ($\mathbf{XnDi}(t)$) ausgehend von dem ASG-Signal überzugehen,

und zwar ausgehend von einem entsprechenden Winkelinkrement ($d\theta_{com}$), wobei das Winkelinkrement ($d\theta_{com}$) für jede empfindliche Achse (X-X, Y-Y, Z-Z) erhalten wird durch die Beziehung:

$$d\theta_{com} = \theta_{ASG}(t_{com}) - \theta_{MEMS}(t_{com}-T_e) - \Delta\theta$$

worin $d\theta_{com}$ das Winkelinkrement ist;
$\theta_{ASG}(t_{com})$ eine Größe ist, die gleich der Summe der Drehwinkelinkremente ($d\theta_{ASG}$) um die empfindliche Achse (X-X, Y-Y, Z-Z) zwischen dem zweiten Zeitpunkt ($t_d$) und dem dritten Zeitpunkt ($t_{com}$) ist, die ausgehend von dem ASG-Signal berechnet werden;
$\theta_{MEMS}(t_{com}-T_e)$ eine Größe ist, die gleich der Summe der Drehwinkelinkremente ($d\theta_{MEMS}$) um die empfindliche Achse (X-X, Y-Y, Z-Z) zwischen dem zweiten Zeitpunkt ($t_d$) und einer Dauer $T_e$ vor dem dritten Zeitpunkt ($t_{com}$) ist, die ausgehend von dem MEMS-Signal berechnet werden;
wobei jedes Inkrement ($d0_{MEMs}$, $d\theta_{ASG}$) gleich dem Integral der Drehwinkelgeschwindigkeit ($\omega$) um eine empfindliche Achse (X-X, Y-Y, Z-Z) zwischen zwei aufeinanderfolgenden Zeitpunkten ist, die aus dem entsprechenden MEMS bzw. ASG-Signal ergeht,
$\Delta\theta$ ein vorbestimmter Winkelkorrekturterm ist; und
$T_e$ eine vorbestimmte Dauer ist;

- eine zweite Phase zwischen dem dritten Zeitpunkt ($t_{com}$) und dem vierten Zeitpunkt ($t_{rec}$), um die Trajektorie ($\mathbf{Xn}(t)$) und jede verzerrte Trajektorie ($\mathbf{XnDi}(t)$) ausgehend von dem ASG-Signal zu berechnen.

5. Verfahren nach Anspruch 4, wobei die Winkelkorrektur ($\Delta\theta$) gleich dem Mittelwert der im Laufe der Zeit über die Menge ($\theta_{ASG} - \theta_{MEMS}$) aufgenommenen Werte zwischen dem zweiten Zeitpunkt ($t_d$) und dem dritten Zeitpunkt ($t_{com}$) ist,
worin $\theta_{ASG}$ eine Größe zu einem gegebenen Zeitpunkt ist, die gleich der Summe der Drehwinkelinkremente ($d\theta_{AGS}$) um die empfindliche Achse (X-X, Y-Y, Z-Z) ab dem zweiten Zeitpunkt ($t_d$) bis zum gegebenen Zeitpunkt ist, die ausgehend von dem ASG-Signal für den betrachteten Trägheitssensor 4 erhalten werden, und
$\theta_{MEMS}$ eine Größe ist, die zu einem gegebenen Zeitpunkt gleich der Summe der Drehwinkelinkremente ($d\theta_{MEMS}$) um die empfindliche Achse (X-X, Y-Y, Z-Z) ab dem zweiten Zeitpunkt ($t_d$) bis zum gegebenen Zeitpunkt ist, die ausgehend von dem MEMS-Signal erhalten werden.

6. Verfahren nach einem der Ansprüche 1 bis 5, umfassend das Berechnen der nominale Trajektorie ($\mathbf{Xn}(t)$) ab dem vierten Zeitpunkt ($t_{rec}$) nur ausgehend von den ASG-Signalen.

7. Computerprogrammprodukt, enthaltend Programmcodeanweisungen, die bei Ausführen auf einem Computer das Navigationshilfsverfahren nach einem der Ansprüche 1 bis 6 durchführen.

8. Trägheitsnavigationssystem (2), das in Bezug auf einen Festkörper (7) fest ist, wobei das Trägheitssystem (2) zumindest einen Trägheitssensor (4) mit einer empfindlichen Achse (X-X, Y-Y, Z-Z) enthält, wobei jeder Trägheitssensor (4) ein Atomspin-Gyroskop (ASG) (8) und ein Gyroskop mit elektromagnetischem Mikrosystem (MEMS) (10) enthält, die miteinander verbunden sind, wobei das ASG-Gyroskop (8) dazu geeignet ist, ein ASG-Signal zu liefern, das repräsentativ ist für eine Drehung um die entsprechende empfindliche Achse (X-X, Y-Y, Z-Z), wobei das MEMS-Gyroskop (10) dazu geeignet ist, ein MEMS-Signal zu liefern, das repräsentativ ist für eine Drehung um die entsprechende empfindliche Achse (X-X, Y-Y, Z-Z), wobei das Trägheitssystem (2) ferner einen Rechner (6) enthält, der dazu ausgelegt ist, das Navigationshilfsverfahren nach einem der Ansprüche 1 bis 6 durchzuführen.

## Claims

1. A navigational aid method for an inertial navigation system (2) fixed with respect to a solid (7), the inertial system (2) including at least one inertial sensor (4) having a sensitive axis (X-X, Y-Y, Z-Z), each inertial sensor (4) comprising an atomic spin (ASG) gyroscope (8) and a microelectromechanical system (MEMS) gyroscope (10) integral with each other, the ASG gyroscope (8) being able to deliver an ASG signal representative of a rotation about the corresponding sensitive axis (X-X, Y-Y, Z-Z), the MEMS gyroscope (10) being able to deliver a MEMS signal representative of a rotation about the corresponding sensitive axis (X-X, Y-Y, Z-Z), the method including the steps of:

   - calculating, between a first date (t=0) and a subsequent third date ($t_{com}$), a path ($\mathbf{Xn}$(t)) and, for each inertial sensor (4), a corresponding biased path **(XnDi(t))**, from the MEMS signals, assuming, for the biased path ($\mathbf{XnDi}$(t)), that the inertial sensor (4) has a predetermined unit bias (D0x, D0y, D0z);
   - calculating, from the third date ($t_{com}$), the path ($\mathbf{Xn}$(t)) and each biased path **(XnDi(t))** from the ASG signals, assuming, for the biased path ($\mathbf{XnDi}$(t)), that the inertial sensor (4) has a predetermined unit bias (D0x, D0y, D0z);
   - estimating a bias vector ($\mathbf{B_0}$) introduced by the MEMS gyroscopes (10), from the MEMS signals and ASG signals;
   - resetting, at a fourth date (tree) subsequent to the third date ($t_{com}$), the path ($\mathbf{Xn}$(t)) as a function of each biased path ($\mathbf{XnDi}$(t)), the unit biases (D0x, D0y, D0z) and the estimated bias vector ($\mathbf{B_0}$), to obtain a nominal path which is not affected by the bias of the MEMS gyroscopes (10).

2. The method according to claim 1, wherein, for each MEMS gyroscope (10), a corresponding component ($b_{0x}$, $b_{0y}$, $b_{0z}$) of the bias vector ($\mathbf{B_0}$) is equal to an average, between a second date ($t_d$) and the fourth date ($t_{rec}$), of a difference between an angular velocity from the corresponding MEMS signal and an angular velocity from the corresponding ASG signal, the second date ($t_d$) being included between the first date (t=0) and the third date ($t_{com}$).

3. The method according to claim 1 or 2, wherein the nominal path ($\mathbf{Xn}$(t)) is obtained by subtracting an offset ($\delta\mathbf{Xn}$) from the path ($\mathbf{Xn}$(t)), the offset being a vectorial corrective term calculated according to:

$$\delta\mathbf{Xn} = b_{0x}\frac{\partial\widetilde{\mathbf{Xn}}}{\partial D0x} + b_{0y}\frac{\partial\widetilde{\mathbf{Xn}}}{\partial D0y} + b_{0z}\frac{\partial\widetilde{\mathbf{Xn}}}{\partial D0z}$$

where $\delta\mathbf{Xn}$ is the offset;
$b_{0i}$ is the i-th component of the bias vector ($\mathbf{B_0}$); and

the quantity $\frac{\partial\widetilde{Xn}}{\partial D0i}$ is calculated according to:

$$\frac{\partial\widetilde{\mathbf{Xn}}}{\partial D0i} = \frac{\mathbf{XnDi}(t_{rec}) - \mathbf{Xn}(t_{rec})}{D0i}$$

where $\mathbf{XnDi}(t_{rec})$ is the i-th biased path ($\mathbf{XnDi}$(t)) taken at the fourth date ($t_{rec}$); and
D0i is the predetermined unit bias associated with the component i.

4. The method according to claim 1 comprising a second date ($t_d$) comprised between the first date (t=0) and the third date ($t_{com}$), or method according to claim 2, or method according to claim 3 when depending upon claim 1 and comprising a second date ($t_d$) comprised between the first date (t=0) and the third date ($t_{com}$), or method according to claim 3 when depending upon claim 2, comprising an overlap step, the overlap step including:

- between the second date ($t_d$) and the third date ($t_{com}$), a first phase for calculating the path (**Xn**(t)) and each biased path (**XnDi**(t)) from the MEMS signal;
- at the third date ($t_{com}$), a switching from a calculation from the MEMS signal of the path (**Xn**(t)) and each biased path (**XnDi**(t)) to a calculation from the ASG signal of the path (**Xn**(t)) and each biased path (**XnDi**(t)) from a corresponding angle increment ($d\theta_{com}$), the angle increment ($d\theta_{com}$) being obtained, for each sensitive axis (X-X, Y-Y, Z-Z), by the relationship:

$$d\theta_{com} = \theta_{ASG}(t_{com}) - \theta_{MEMS}(t_{com}-T_e) - \Delta\theta$$

where $d\theta_{com}$ is the angle increment;
$\theta_{ASG}(t_{com})$ is a quantity equal to a cumulation of rotation angle increments ($d\theta_{ASG}$) about the sensitive axis (X-X, Y-Y, Z-Z) between the second date ($t_d$) and the third date ($t_{com}$), which are calculated from the ASG signal;
$\theta_{MEMS}(t_{com}-T_e)$ is a quantity equal to a cumulation of rotation angle increments ($d\theta_{MEMS}$) about the sensitive axis (X-X, Y-Y, Z-Z) between the second date ($t_d$) and a duration $T_e$ before the third date ($t_{com}$), which are calculated from the MEMS signal;
each increment ($d\theta_{ASG}$, $d\theta_{MEMS}$) being equal to an integral, between two successive instants, of the angular velocity ($\omega$) of a rotation about a sensitive axis (X-X, Y-Y, Z-Z) from the corresponding MEMS or ASG signal, $\Delta\theta$ is a predetermined angular correction; and
$T_e$ is a predetermined duration;

- between the third date ($t_{com}$) and the fourth date ($t_{rec}$), a second phase for calculating the trajectory (**Xn**(t)) and each biased trajectory (**XnDi**(t)) from the ASG signal.

5. The method according to claim 4, wherein the angular correction ($\Delta\theta$) is equal to an average, between the second date ($t_d$) and the third date ($t_{com}$), of values taken over time by the quantity ($\theta_{ASG} - \theta_{MEMS}$), where $\theta_{ASG}$ is a quantity equal, at a given instant, to a cumulation from the second date ($t_d$) up to said given instant, of the rotation angle increments ($d\theta_{ASG}$) about the sensitive axis (X-X, Y-Y, Z-Z) which are obtained from the ASG signal, for the considered inertial sensor (4), and
$\theta_{MEMS}$ is a quantity equal, at a given instant, to a cumulation, from the second date ($t_d$) up to said given instant, of the rotation angle increments ($\theta_{MEMS}$) about the sensitive axis (X-X, Y-Y, Z-Z), which are obtained from the MEMS signal.

6. The method according to any one of claims 1 to 5, including, from the fourth date ($t_{rec}$), calculating the nominal path (**Xn**(t)) only from the ASG signals.

7. A computer program product comprising program code instructions which, when executed by a computer, implement the navigational aid method according to any one of claims 1 to 6.

8. An inertial navigation system (2) fixed with respect to a solid (7), the inertial system (2) including at least one inertial sensor (4) having a sensitive axis (X-X, Y-Y, Z-Z), each inertial sensor (4) comprising an atomic spin (ASG) gyroscope (8) and a microelectromechanical system (MEMS) gyroscope (10) integral with each other, the ASG gyroscope (8) being able to deliver an ASG signal representative of a rotation about the corresponding sensitive axis (X-X, Y-Y, Z-Z), the MEMS gyroscope (10) being able to deliver a MEMS signal representative of a rotation about the corresponding sensitive axis (X-X, Y-Y, Z-Z), the inertial system (2) further comprising a calculator (6) configured to implement the navigational aid method according to any one of claims 1 to 6.

FIG. 1

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. FANQ.** Advances in Atomic Gyroscopes: A View from Inertial Navigation Applications. *J. Qin dans SENSORS,* 11 Décembre 2012, vol. 12 (12), 6331-6346